# EUROPEAN PATENT SPECIFICATION

(11) **EP 3 167 705 B1**
(45) Date of publication and mention of the grant of the patent: **02.09.2020**
(21) Application number: 15194318.0
(22) Date of filing: 12.11.2015
(51) Int. Cl.: A01G 9/14

(54) **SUPPORT SYSTEM FOR CULTIVATING CROPS**
TRÄGERSYSTEM ZUM ZÜCHTEN VON PFLANZEN
SYSTÈME DE SUPPORT POUR CULTIVER DES PLANTES

(43) Date of publication of application: 17.05.2017
(73) Proprietor: GEGE Machinebouw B.V., 5400 AG Uden (NL)
(72) Inventor: van Asseldonk, Johannes Maria, 5464 RA Veghel (NL)
(74) Representative: Hylarides, Paul Jacques

(56) References cited:
- WO-A1-81/03257
- WO-A1-2014/196744
- DE-A1- 2 920 155
- JP-A- 2002 058 350
- NL-A- 9 000 558

## Description

The invention relates to a support system for crops or a precursor thereof according to the appended claims.

Strawberry plants are generally cultivated in a so-called tray field. A tray field is a field on which trays are placed in which the crop or the precursor thereof is arranged. The ground surface of the field is covered with a watertight sheet so as to not allow passage of water, and a groundsheet (for instance root barrier) to protect the crop from weeds. Arranged on the ground are parallel concrete pathways along which equipment can be moved with which the crop can be treated, such as spraying equipment and equipment for placing and picking up the trays.

The known tray fields do however have a number of drawbacks. The trays in the current tray fields lie in rows, wherein a small mutual distance is left clear between the rows, typically between 15 cm and 20 cm, this mutual distance being kept clear so as to have space to walk along and process the crop. This has the result that there are relatively few plants per given surface area of the tray field. The intermediate distances have the further result that when the field is sprayed a part of the spray falls in the space between the trays and is therefore lost. A relatively large amount of spray, and thereby a relatively larger quantity of plant protection products and fertilizers, are therefore necessary. This is costly and bad for the environment.

A further drawback of the known tray fields is that arranging of the concrete paths is costly. Another drawback of the known tray fields is that the ground must be covered. This entails costs. Furthermore, despite the ground being covered, diseases nevertheless still occur frequently in the known tray fields, for instance as a result of water splashing from the ground onto the plants and/or as a result of the fact that pathogens can lodge in or on the sheet and the root barrier.

A further drawback of the known tray fields is that the ground has a great influence on the temperature management. This can result in large temperature fluctuations, which can adversely affect the growth of the crop.

Because the crop must be frequently sprayed, the current tray fields are covered with watertight sheet in order to prevent the field becoming a mud bath. The rainwater and the water from spraying cannot therefore drain properly into the ground and eventually flows into the ditch. This often results in a single discharge point of the water. Because this water also contains fertilizers and plant protection products, it is mandatory in many countries to collect this contaminated water in order to subsequently clean and reuse it. The amounts of water are however very large and it is difficult to remove all pathogens from the water before it can be reused.

WO 2014/196744 A1, DE 29 20 155 A1, NL 9000558 A, WO 81/03257 A1, JP 2002 058350 A illustrate system for cultivating crops in trays.

It is an object of the invention to obviate, or at the very least reduce at least one of the above stated drawbacks.

It is a further object of the invention to provide a simple, light, durable and inexpensive construction for cultivating crops and/or to provide a construction which simplifies mechanization and/or automation of a number of crop treatment steps.

According to the invention, at least one of these objects is achieved with a support system for cultivating crops in one or more trays according to claim 1.

The support system has a number of advantages compared to the current tray fields. One advantage is that the support system makes it possible to place more plants per unit of area since the intermediate distance between the rows of trays in the support system can be minimal, typically 2 cm or less, since no space need be left clear for a person to be able to walk along the trays. Fewer plant protection products and fertilizers are necessary for the same number of plants because the trays can lie closer together and so less of the products need be lost.

The shape of a profile (for instance the upper outer end thereof), in combination with the shape of tray (for instance the underside thereof) are further embodied such that the tray can be supported in stable manner by the profile. In a determined embodiment the profile and the tray are configured to co-act such that the tray is carried in stable manner when supported by only a single profile. The tray is provided with a receiving space in which the upper side of the profile is placeable for the purpose of supporting the tray in stable and centred manner relative to adjacent profiles. In these embodiments the tray remains in neatly centred arrangement in the support system, even in the unlikely event they are bumped against (e.g. in lateral direction) or when the trays are displaced in longitudinal direction (e.g. by pushing a row of trays in a determined direction). This further allows very small spacing between adjacent trays, and thereby optimum use of the available surface area.

In determined embodiments the profile is embodied for fixedly clamping the underside of the tray thereon. This can provide additional stability. Even in the fixedly clamped situation the tray is still slidable along the profile so that during sliding of a tray, for instance as a result of an extra tray being added at the beginning of a support system, the tray remains supported in stable manner on the profile.

The profiles preferably extend a relatively large distance from the ground surface, for instance more than 0.3 m (and less than 1.0 m) so that the crop is affected less by water potentially holding pathogens splashing up from the ground surface. In addition, the sheet and the root barrier are no longer necessary, so there can be no question of problems caused by pathogens possibly lodging therein. Because the crop stands clear of the ground, it has less influence on the crop, whereby peaks in high and low temperatures are reduced.

The support parts are preferably supported on separate foundation elements such as foundation slabs. Since sheet and root barrier are no longer necessary, no special requirements are laid down for the ground surface, and it can for instance consist of grass.

The positioning of rows of trays in one or more tracks with longitudinal girders on either side makes it easier to mechanize and/or automate the treatment of the crop (e.g. spraying, cutting and the like) or handling of the trays (pickup or placing). Labour costs can hereby be reduced.

According to an embodiment of the invention, the shape of a profile is embodied so that a tray can be placed in stable manner on the upper outer end thereof. The tray can for instance be embodied as a platform comprising at least two parallel rows of crop holders, wherein a receiving space is formed between the lower outer ends of adjacent rows of crop holders. This receiving space can be embodied for receiving the upper side of a profile therein so that the tray can rest stably on only a single profile. In determined embodiments a profile is embodied here for fixedly clamping the underside of the tray thereon (for instance as a result of the shape and/or flexibility of the material of the profile and the tray), or the upper outer end of the profile is in any case embodied so that the receiving space is placeable in substantially fitting manner over the upper outer end of the profile. In other embodiments which does not fall under the scope of the claims, however, there is no direct clamping of the tray to the profile. An example of a suitable profile is that in which the cross-section is substantially (reverse) U-shaped or V-shaped. The upper side of the U or V is then placed in the receiving space and ensures that the tray can rest on the profile without tilting.

In an embodiment a profile is embodied so as to support the tray over the whole length thereof so that it will have less of a tendency to sag. If the trays begin to sag, the plants in the middle of the tray will receive more water than the outermost plants, and this is detrimental to the quality of the plants.

In an embodiment a profile and/or tray is embodied so as to allow a tray to be supported in the centre by the profile. Because the support construction lies in the centre under the trays, it can never get in the way, for instance during automatic cutting of the plants between the trays.

In an embodiment the profiles are manufactured from rolled profile material, in particular rolled strip steel. Supporting the trays with rolled profile material has a number of advantages. The profiles can for instance be formed *in situ* from flat strip material, for instance using a mobile profile roller. Strip steel can for instance be available on roll. This reduces transport costs since the strip material is much easier to transport. Such profiles can further be formed in one piece, depending on the length of the strip material. A strong, light and therefore inexpensive support construction can further be obtained by profiling of the thin strip material.

In embodiments in which a profile is manufactured in one piece or in embodiments in which the transition between profiles arranged mutually in line is given a smooth form, the trays can be guided easily over the profiles. The profiles are preferably given a smooth form on the upper outer end in order to enable displacement of the tray in longitudinal direction. The trays can in this way be shifted in optionally automatic manner, for instance in order to fill or empty the support from one side. Each profile further has a length such that a row of trays can be supported. A hundred or more trays can typically be supported on a single profile.

Provided in embodiments of the invention is a crop treatment carriage. The carriage comprises wheels which are embodied to travel over the longitudinal girders so as to enable displacement in longitudinal direction over the track. The carriage can be driven by hand. Provided in determined embodiments however is a drive motor unit for displacing the crop treatment carriage along the track and a control unit for controlling the drive motor unit. The above-mentioned concrete paths are for instance no longer necessary. Because the treatments and care can take place using a carriage movable over the longitudinal girders (more particularly a number of rails thereof), costs and ground area of paths can be saved.

Because the trays have a fixed position in the support system and because the support system can be of fully flat construction, it is readily possible to automate processing of the trays and care of the crop. A number of operations can be automated using the above-mentioned carriage.

The system can for instance comprise a tray processing unit mounted on the carriage for setting down and/or picking up trays respectively on or from the profiles. In another embodiment the system comprises a crop treatment unit mounted on the carriage for treating the crop in the crop holders of the trays placed in the track. This facilitates manual labour on the plants (placing of plants in the trays, weeding and the like), trimming (removing tendrils) of the plants, suctioning up the trimmed parts, automatic spraying of the plants and/or automatic covering of the plants with a cloth or a sheet.

Further advantages, features and details of the invention will be elucidated with reference to the following description of some embodiments thereof. Reference is made in the description to the accompanying figures, in which:
Figure 1 shows a front view or section over one track with a rail profile on either side. The right-hand half shows only the construction, the left-hand half is with trays.
Figure 2 is a side view of the rail construction with legs and foundation slabs.
Figure 3 is a side view of the rolled profiles on the supporting construction. The right-hand half shows only the construction, the left-hand half is with trays.

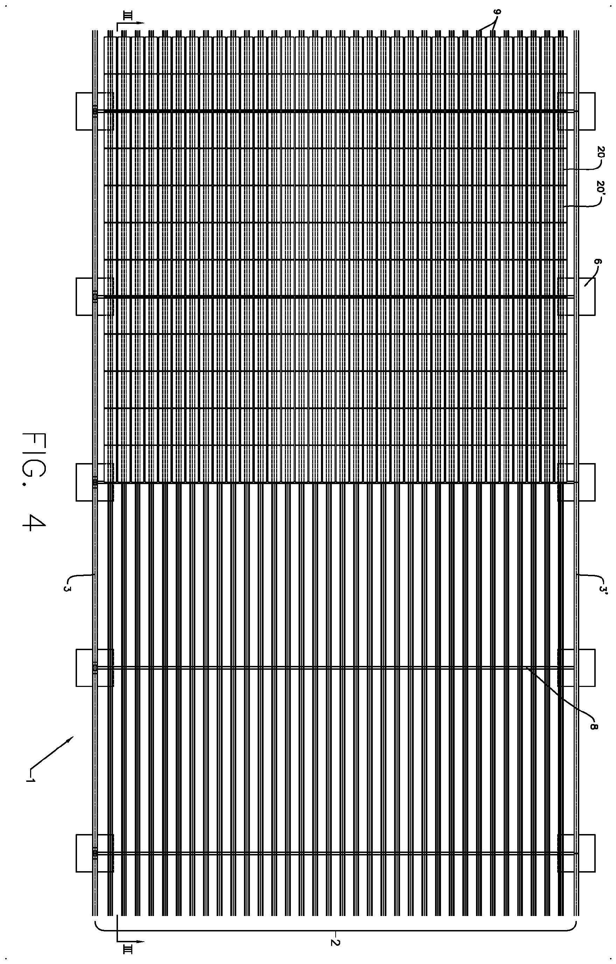

Figure 4 is a top view of one track with a longitudinal girder (provided with rails) on either side. The right-hand half shows only the construction, the left-hand half is with trays.
Figures 5 and 6 show cross-sections of two examples of a profile with a tray.
Figures 7 and 8 show views of two examples of a tray without plants.
Figures 9 and 10 show views of two examples of a tray with plants.

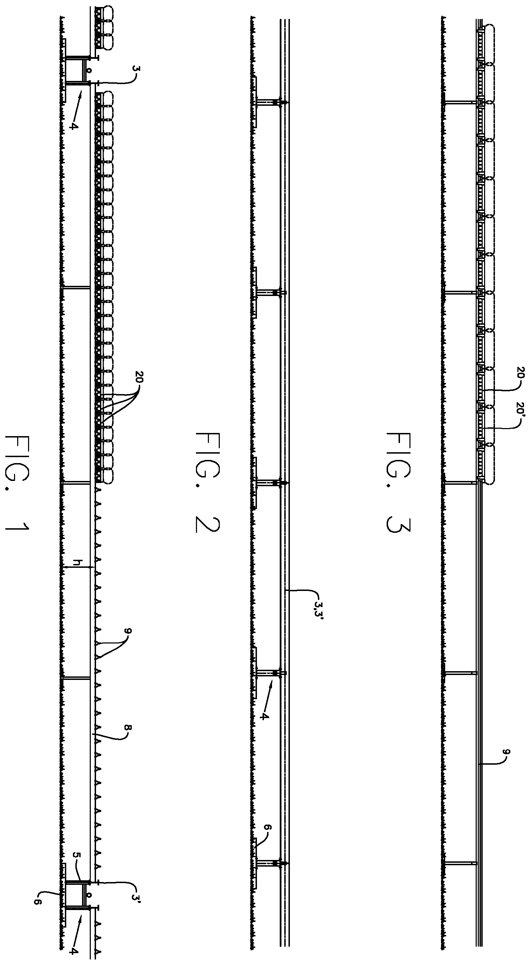

In the shown example the support system 1 comprises a minimum of one track 2 of a determined length. The number of tracks can be increased in unlimited manner in the width. The usual width of the tracks can lie between for instance 5 and 20 metres. The length of the tracks can vary, depending on the land available, from for instance 50 to 500 metres. The height (h in figure 1) of the system is variable, but a usual height is for instance 0.5 metre. System 1 can also be applied on existing tray fields while retaining the concrete paths. The construction is in that case built between the paths. The paths can then still be used to perform treatments and care.

System 1 comprises per track 2 two longitudinal profiles 3,3' on both longitudinal sides along the whole length of the track. Longitudinal profiles 3,3' are supported by support parts 4, in the specific examples legs 5, at a determined centre-to-centre distance. Legs 5 stand on a (concrete) foundation slab 6 for the purpose of distributing the load on the ground surface. The dimensions of the longitudinal girders, legs and slabs depend on the load and load-bearing capacity of the ground in the relevant application. When there are a plurality of tracks alongside each other, the legs of the two longitudinal girders can be coupled to one slab. There is space for instance for a spray line between the tracks.

Placed transversely between longitudinal girders 3,3' are transverse girders 8, again at a determined centre-to-centre distance. Depending on the load and the width of track 2, these transverse girders 8 can be further supported by one or more legs. The legs can be provided with a slab or large base plate for the purpose of distributing the load on the ground.

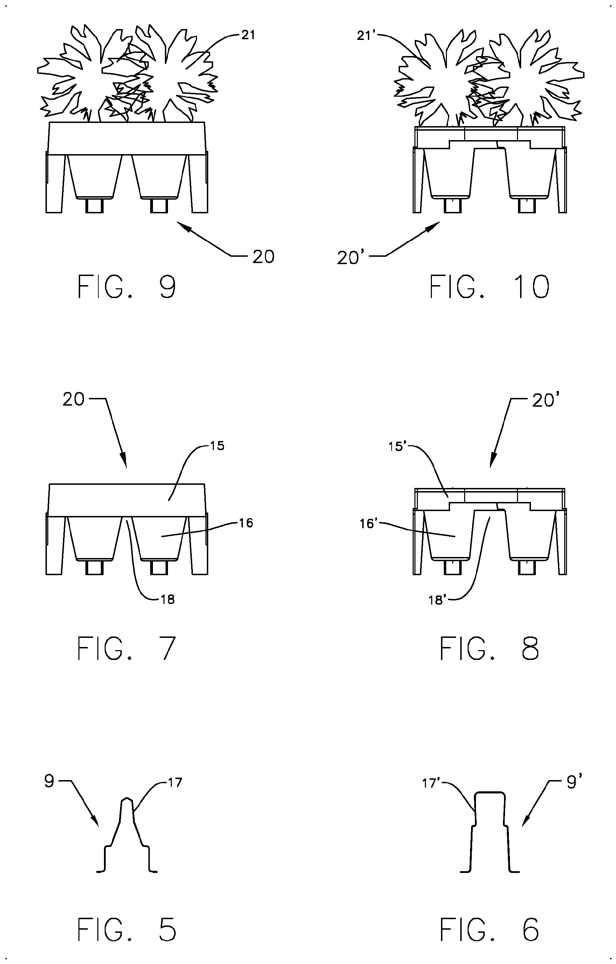

Profiles 9 or 10 (figures 5 and 6) are placed over transverse girders 8 and in the lengthwise direction of track 2. These profiles serve as support construction for trays 20,20'. Profiles 9,10 have sufficient load-bearing capacity for the span between transverse girders 8.

Tray 20,20' comprises a platform 15,15' (figures 7 and 8) provided with a number (1, 2, 3 etc.) of rows of holders 16,16' for holding crops or a precursor thereof. A receiving space 18,18' is provided between the two rows. The upper outer end 17,17' of the profile can be received in this receiving space 18,18', this such that tray 20,20' is hereby supported in stable manner by the profile. Figures 9 and 10 show tray 20,20' with plants 21,21'.

The present invention is not limited to the embodiments thereof described here. The rights sought are rather determined by the following claims, within the scope of which many modifications can be envisaged.

## Claims

1. Support system (1) for cultivating crops in one or more trays (20), the support system (1) comprising:
- one or more trays (2) configured for holding a crop or a precursor thereof therein;
one or more elongate tracks (2) for supporting a number of parallel rows of said trays,
wherein each track comprises:
a first longitudinal girder (3) positioned on a first longitudinal side of the track;
a second longitudinal girder (3') positioned on an opposite second longitudinal side of the track;
support parts (4) for supporting the first and second longitudinal girder at substantially constant distance relative to the ground;
a number of transverse girders (8) attached to the first and second longitudinal girders;
a number of profiles (9,10) attached to the transverse girders and extending parallel to the longitudinal girders;
**characterized in that** the support system (1) comprises at least one tray (20) provided at its underside and in its centre with a receiving space (18,18'), **in that** the upper side (17,17') of the profile is configured to fixedly clamp the underside of the tray on the profile so as to support the tray (20) in its centre in a stable and centred manner relative to adjacent profiles, and **in that** the profile is further configured to allow the tray to slide along the profile while the profile is in the fixedly clamped situation wherein the profile is lying in the centre under the tray.

2. Support system as (1) claimed in claim 1, wherein the tray (20) comprises rows of crop holders and the receiving space is formed between the lower outer ends of adjacent rows of crop holders.

3. Support system (1) as claimed in claim 1 or 2, wherein the tray comprises a platform (15) provided with a number of rows of crop holders (161) for holding crops or a precursor thereof wherein the platform with cup holders is stably placeable on top of the profile.

4. Support system (1) as claimed in claim 1, wherein the profile and the tray (20) are configured to co-act such that the tray is carried in stable manner when supported by only a single profile.

5. Support system (1) as claimed in any of the foregoing claims, wherein a profile has a substantially U-shaped or V-shaped cross-section.

6. Support system (1) as claimed in any of the foregoing claims, wherein, when a tray (20) comprises a platform (15,15') with two parallel rows of crop holders and a receiving space is formed between the lower outer ends of adjacent rows of crop holders, the upper outer end of the profile is embodied so that the receiving space at the underside of the tray is placeable in substantially fitting manner over the upper outer end of the profile.

7. Support system (1) as claimed in any of the foregoing claims, wherein a profile is embodied so as to support the tray (20) over the whole length thereof.

8. Support system (1) as claimed in any of the foregoing claims, wherein the profiles are manufactured from rolled profile material, in particular from rolled strip steel and/or wherein the profiles are manufactured *in situ* and/or wherein the profiles are manufactured from strip steel to be profiled *in situ.*

9. Support system (1) as claimed in any of the foregoing claims, wherein the length of a profile is sufficient to support a number of trays (20) which are placed or to be placed successively and wherein the profile is manufactured in one piece.

10. Support system (1) as claimed in any of the foregoing claims, wherein the profiles are given a smooth form on the upper outer end in order to enable displacement of the tray in longitudinal direction.

11. Support system (1) as claimed in any of the foregoing claims, comprising a crop treatment carriage provided with wheels which are embodied to travel over the longitudinal girders in order to displace the crop treatment carriage in longitudinal direction over the track, further comprising:
- a drive motor unit for displacing the crop treatment carriage along the track;
- a control unit for controlling the drive motor unit.

12. Support system (1) as claimed in any of the foregoing claims, comprising a tray processing unit mounted on the carriage for setting down and/or picking up trays respectively on or from the profiles.

13. Support system (1) as claimed in any of the foregoing claims, wherein the system is configured for cultivation of strawberry plants.

## Patentansprüche

1. Trägersystem (1) zum Züchten von Pflanzen in einer oder mehreren Wannen (20), wobei das Trägersystem (1) aufweist:
- eine oder mehrere Wannen (2), die ausgestaltet sind, um eine Pflanze oder ein Vorprodukt davon darin aufzubewahren;
eine oder mehrere Längsbahnen (2), um mehrerer parallele Reihen der Wannen zu tragen, wobei eine jede Bahn aufweist:
einen ersten Längsträger (3), der an einer ersten Längsseite der Bahn angeordnet ist;
einen zweiten Längsträger (3'), der an einer gegenüberliegenden zweiten Längsseite der Bahn angeordnet ist;
Trägerteile (4) zum Tragen des ersten und zweiten Längsträgers an einem im Wesentlichen konstanten Abstand bezüglich des Bodens;
mehrere Querträger (8), die an den ersten und zweiten Längsträgern angebracht sind;
mehrere Profile (9, 10), die an den Querträgern angebracht sind, und parallel zu den Längsträgern verlaufen;
**dadurch gekennzeichnet, dass**
das Trägersystem (1) wenigstens eine Wanne (20) aufweist, die an der Unterseite davon und in der Mitte davon mit einem Aufnahmeraum (18, 18') vorgesehen ist, darin, dass die Oberseite (17, 17') des Profils ausgestaltet ist, um die Unterseite der Wanne am Profil fest anzuklemmen, um so die Wanne (20) in der Mitte in einer stabilen und zentrierten Weise bezüglich der benachbarten Profile zu tragen und darin, dass das Profil weiterhin ausgestaltet ist, der Wanne ein Gleiten entlang dem Profil zu ermöglichen, während das Profil sich in der fest eingeklemmten Situation befindet, wobei das Profil in der Mitte unter der Wanne liegt.

2. Trägersystem (1) nach Anspruch 1, wobei die Wanne (20) Reihen von Pflanzenhalterungen aufweist und der Aufnahmeraum zwischen den unteren äußeren Enden der benachbarten Reihen von Pflanzenhalterungen ausgebildet ist.

3. Trägersystem (1) nach Anspruch 1 oder 2, wobei die Wanne eine Plattform (15) aufweist, die mit mehreren Reihen von Pflanzenhalterungen (161) vorgesehen ist, um Pflanzen oder ein Vorprodukt davon aufzunehmen, wobei die Plattform mit Tassenhalterungen stabil auf dem Profil anordenbar ist.

4. Trägersystem (1) nach Anspruch 1, wobei das Profil und die Wanne (20) ausgestaltet sind, um miteinander zusammenzuwirken, sodass die Wanne in stabiler Weise getragen wird, wenn sie von nur einem einzelnen Profil getragen wird.

5. Trägersystem (1) nach einem der vorhergehenden Ansprüche, wobei ein Profil einen im Wesentlichen U-förmigen oder V-förmigen Querschnitt hat.

6. Trägersystem (1) nach einem der vorhergehenden Ansprüche, wobei wenn eine Wanne (20) eine Plattform (15, 15') mit zwei parallelen Reihen an Pflanzenhalterungen aufweist, und ein Aufnahmeraum zwischen den unteren äußeren Enden der benachbarten Reihen der Pflanzenhalterungen ausgebildet ist, ist das obere äußere Ende des Profils so ausgeführt, dass der Aufnahmeraum an der Unterseite der Wanne in einer im Wesentlichen einpassenden Weise über dem oberen äußeren Ende des Profils anordenbar ist.

7. Trägersystem (1) nach einem der vorhergehenden Ansprüche, wobei ein Profil so ausgeführt ist, dass es die Wanne (20) über die gesamte Länge davon trägt.

8. Trägersystem (1) nach einem der vorhergehenden Ansprüche, wobei die Profile aus Walzprofilmaterial hergestellt sind, im Besonderen aus gewalztem Bandstahl und/oder wobei die Profile vor Ort hergestellt werden und/oder wobei die Profile aus vor Ort zu profilierendem Bandstahl hergestellt sind.

9. Trägersystem (1) nach einem der vorhergehenden Ansprüche, wobei die Länge eines Profils ausreichend ist, um mehrere Wannen (20) zu tragen, die nacheinander angeordnet sind oder anzuordnen sind und wobei das Profil in einem Stück hergestellt ist.

10. Trägersystem (1) nach einem der vorhergehenden Ansprüche, wobei die Profile eine glatte Form am oberen äußeren Ende erhalten, um eine Versetzung der Wanne in der Längsrichtung zu ermöglichen.

11. Trägersystem (1) nach einem der vorhergehenden Ansprüche, das einen mit Rädern vorgesehenen Pflanzenbehandlungswagen aufweist, der ausgeführt ist, um sich über die Längsträger zu bewegen, um den Pflanzenbehandlungswagen in der Längsrichtung über die Bahn zu versetzen, weiterhin aufweisend:
- eine Antriebsmotoreinheit, um den Pflanzenbehandlungswagen entlang der Bahn zu versetzen;
- eine Steuereinheit, um die Antriebsmotoreinheit anzusteuern.

12. Trägersystem (1) nach einem der vorhergehenden Ansprüche, das eine Wannenverarbeitungseinheit aufweist, die an dem Wagen angebracht ist, um abgesetzt zu werden und/oder jeweils Wannen auf oder von den Profilen aufzunehmen.

13. Trägersystem (1) nach einem der vorhergehenden Ansprüche, wobei das System zum Züchten von Erdbeerpflanzen ausgestaltet ist.

## Revendications

1. Dispositif de support (1) destiné à cultiver des plantes dans un ou plusieurs plateaux (20), le dispositif de support (1) comprenant :
un ou plusieurs plateaux (2) configurés de manière à maintenir une plante ou un précurseur de celle-ci à l'intérieur ;
une ou plusieurs pistes allongées (2) destinées à supporter un certain nombre de rangées parallèles desdits plateaux, dans lequel chaque piste comprend :
une première poutrelle longitudinale (3) positionnée sur un premier côté longitudinal de la piste ;
une seconde poutrelle longitudinale (3') positionnée sur un second côté longitudinal opposé de la piste ;
des parties de support (4) destinées à supporter les première et seconde poutrelles longitudinales à une distance sensiblement constante par rapport au sol ;
un certain nombre de poutrelles transversales (8) fixées sur les premières et secondes poutrelles longitudinales ;
un certain nombre de profilés (9, 10) fixés sur les poutrelles transversales et s'étendant parallèlement aux poutrelles longitudinales ;
**caractérisé en ce que** le dispositif de support (1) comprend au moins un plateau (20) comportant, au niveau de sa face inférieure et en son centre, un espace de réception (18, 18'), **en ce que** la face supérieure (17, 17') du profilé est configurée de manière à bloquer à demeure la face inférieure du plateau sur le profilé afin de supporter le plateau (20) en son centre d'une manière stable et centrée par rapport aux profilés adjacents, et **en ce que** le profilé est, en outre, configuré de manière à permettre le glissement du plateau le long du profilé alors que le profilé est dans la situation bloquée à demeure dans laquelle le profilé repose au centre au-dessous du plateau.

2. Dispositif de support (1) selon la revendication 1, dans lequel le plateau (20) comprend des rangées de supports de plante et l'espace de réception est formé entre les extrémités externes inférieures de rangées adjacentes de supports de plante.

3. Dispositif de support (1) selon la revendication 1 ou 2, dans lequel le plateau comprend une plate-forme (15) comportant un certain nombre de rangées de supports de plante (161) afin de maintenir les plantes ou un précurseur de celles-ci dans lequel la plate-forme avec des supports de coupelle peut être placée de manière stable au-dessus du profilé.

4. Dispositif de support (1) selon la revendication 1, dans lequel le profilé et le plateau (20) sont configurés de manière à coopérer de telle sorte que le plateau est supporté de manière stable lorsqu'il est supporté uniquement par un seul profilé.

5. Dispositif de support (1) selon l'une quelconque des revendications précédentes, dans lequel le profilé présente une section transversale sensiblement en forme de U ou en forme de V.

6. Dispositif de support (1) selon l'une quelconque des revendications précédentes, dans lequel, lorsqu'un plateau (20) comprend une plate-forme (15, 15') avec deux rangées parallèles de supports de plante et qu'un espace de réception est formé entre les extrémités externes inférieures de rangées de supports de plante adjacentes, l'extrémité externe supérieure du profilé est mise en œuvre de telle sorte que l'espace de réception au niveau de la face inférieure du plateau peut être placé d'une manière sensiblement adaptée sur l'extrémité externe supérieure du profilé.

7. Dispositif de support (1) selon l'une quelconque des revendications précédentes, dans lequel un profilé est mis en œuvre de manière à supporter le plateau (20) sur la totalité de sa longueur.

8. Dispositif de support (1) selon l'une quelconque des revendications précédentes, dans lequel les profilés sont fabriqués à partir de matériau profilé laminé, en particulier, à partir de tôle d'acier laminée et/ou dans lequel les profilés sont fabriqués sur place et/ou dans lequel les profilés sont fabriqués à partir de tôle d'acier à profiler sur place.

9. Dispositif de support (1) selon l'une quelconque des revendications précédentes, dans lequel la longueur d'un profilé est suffisante afin de supporter un certain nombre de plateaux (20) qui sont placés ou doivent être placés successivement et dans lequel le profilé est fabriqué en une seule pièce.

10. Dispositif de support (1) selon l'une quelconque des revendications précédentes, dans lequel les profilés sont formés de manière lisse sur l'extrémité externe supérieure afin de permettre un déplacement du plateau dans la direction longitudinale.

11. Dispositif de support (1) selon l'une quelconque des revendications précédentes, comprenant un chariot de traitement de plante comportant des roues qui sont mises en œuvre afin de se déplacer sur les poutrelles longitudinales dans le but de déplacer le chariot de traitement de plante dans une direction longitudinale sur la piste, comprenant en outre :
une unité formant moteur d'entraînement destinée à déplacer le chariot de traitement de plante le long de la piste ;
une unité de commande destinée à commander l'unité formant moteur d'entraînement.

12. Dispositif de support (1) selon l'une quelconque des revendications précédentes, comprenant une unité de traitement de plateau montée sur le chariot afin de déposer et/ou de prélever des plateaux respectivement sur ou à partir des profilés.

13. Dispositif de support (1) selon l'une quelconque des revendications précédentes, dans lequel le dispositif est configuré afin de cultiver des plants de fraise.
